# EUROPÄISCHE PATENTANMELDUNG

(11) **EP 2 781 898 A1**
(43) Veröffentlichungstag der Anmeldung: **24.09.2014**
(21) Anmeldenummer: 13160624.6
(22) Anmeldetag: 22.03.2013
(51) Int. Cl.: G01J 1/04, G01J 1/42

(54) **Kraftfahrzeug-Sensorvorrichtung**

(71) Anmelder: Delphi Technologies, Inc., Troy, Michigan 48007 (US)
(72) Erfinder: Haack, Albrecht, 42369 Wuppertal (DE); Noll, Diethelm, 57589 Birkenbeul (DE)
(74) Vertreter: Manitz, Finsterwald & Partner GbR

(57) **Zusammenfassung**

Die Erfindung bezieht sich auf eine Kraftfahrzeug-Sensorvorrichtung mit einem Sensor zur Umwandlung von Licht in elektrische Signale, gekennzeichnet durch eine erste Freiformreflektoreinheit, die derart ausgebildet ist, dass sie einen vorgegebenen, in- und/oder außerhalb eines Kraftfahrzeugs befindlichen Bereich auf den Sensor abbildet.

## Beschreibung

Die vorliegende Erfindung betrifft eine Kraftfahrzeug-Sensorvorrichtung mit einem Sensor zur Umwandlung von Licht in elektrische Signale.

Darüber hinaus betrifft die vorliegende Erfindung ein Kraftfahrzeug mit der vorstehend genannten Kraftfahrzeug-Sensorvorrichtung.

Bei herkömmlichen Digitalkameras gelangt Licht durch ein Objektiv in ein Kameragehäuse, in dem das Licht auf einen Bildsensor fällt, der aus dem einfallenden Licht elektrische Signale erzeugt. Das Objektiv weist ein oder mehrere optische Linsen auf, die dazu dienen, das darzustellende Objekt auf den Bildsensor zu fokussieren. Insbesondere kommt es dabei auf eine gute Farbwiedergabe sowie geringe Verzerrung und Dispersion an.

In Kraftfahrzeugen können Digitalkameras als Sensorvorrichtungen zur Objekt- und/oder Gestenerkennung eingesetzt werden. Jedoch ist der Raum, der für Sensorvorrichtungen und insbesondere deren Objektive in Kraftfahrzeugen zur Verfügung steht, oftmals begrenzt. Daher liegt der Erfindung die Aufgabe zugrunde, eine Kraftfahrzeug-Sensorvorrichtung der eingangs genannten Art zu schaffen, die möglichst kompakte Außenmaße ausweist. Ferner soll die Kraftfahrzeug-Sensorvorrichtung möglichst kostengünstig herstellbar sein.

Des Weiteren soll ein Kraftfahrzeug der eingangs genannten Art geschaffen werden.

Diese Aufgabe wird bei einer Kraftfahrzeug-Sensorvorrichtung der eingangs genannten Art durch eine erste Freiformreflektoreinheit gelöst, die derart ausgebildet ist, dass sie einen vorgegebenen, in- und/oder außerhalb eines Kraftfahrzeugs befindlichen Bereich auf den Sensor abbildet.

Ein Freiformreflektor zeichnet sich dadurch aus, dass seine Reflektorform keiner mathematischen Regelfläche entspricht. Insbesondere besteht ein Freiformreflektor aus einer rein mathematisch berechneten Oberflächengeometrie, die die gewünschte optische Reflexionseigenschaft aufweist.

Die erste Freiformreflektoreinheit kann einen oder zwei Freiformreflektoren enthalten.

Erfindungsgemäß wird die Reflektorform des oder der Freiformreflektoren der ersten Freiformreflektoreinheit derart modelliert, dass Objekte, insbesondere Personen, innerhalb des vorgegebenen Bereichs auf den lichtempfindlichen Sensor abgebildet werden. Durch die Verwendung der ersten Freiformreflektoreinheit können in der Regel mehrlinsige Objektive, wie man sie von Kameras kennt, eingespart werden, wodurch die Maße der Kraftfahrzeug-Sensorvorrichtung kleiner ausfallen als bei herkömmlichen Digitalkameras.

Außerdem lassen sich Freiformreflektoren kostengünstig herstellen. Beispielsweise bestehen Freiformreflektoren aus Spritzgussteilen, die metallisiert werden, um die Licht-reflektierenden Flächen zu erzeugen. Derartige Freiformreflektoren sind kostengünstiger als vergleichsweise aufwendige Objektive für Digitalkameras.

Aufgrund der frei wählbaren Form des oder der Freiformreflektoren der ersten Freiformreflektoreinheit können Bereiche mit nahezu beliebigen Bildwinkeln auf den Sensor abgebildet werden. Folglich kann sich das Seitenverhältnis des abgebildeten Bereichs von dem Seitenverhältnis des Sensors unterscheiden. Beispielsweise kann ein Bereich mit einem Seitenverhältnis von 3:10 auf einen als lichtempfindlichen Sensor eingesetzten CMOS (Complementary Metal Oxide Semiconductor)-Sensor mit einem Seitenverhältnis von 3:4 abgebildet werden. Eine derartige Freiformreflektoreinheit weist zudem eine gegenüber üblichen Objektiven hohe Lichtstärke auf.

Ein weiterer Vorteil der erfindungsgemäßen Kraftfahrzeug-Sensorvorrichtung besteht darin, dass für unterschiedliche Anwendungen lediglich die Reflektorform des oder der Freiformreflektoren der ersten Freiformreflektoreinheit angepasst werden muss, die übrigen Bauteile der Kraftfahrzeug-Sensorvorrichtung aber beibehalten werden können.

Vorteilhafterweise umfasst die Kraftfahrzeug-Sensorvorrichtung eine Signalverarbeitungseinheit, welche die von dem Sensor erzeugten elektrischen Signale empfängt und diese verarbeitet. Gemäß einer Ausgestaltung ist dabei im Unterschied zu einer herkömmlichen Digitalkamera nicht die Erstellung eines sichtbaren Bilds aus den von dem Sensor erzeugten elektrischen Signalen vorgesehen. Daher ist es nicht zwingend erforderlich, dass die Signalverarbeitungseinheit die durch die erste Freiformreflektoreinheit bewirkten Verzerrungen korrigiert. Es kann jedoch vorgesehen sein, dass die Signalverarbeitungseinheit bzw. eine in der Signalverarbeitungseinheit ablaufende Software die durch die erste Freiformreflektoreinheit hervorgerufenen Verzerrungen kennt und bei der Verarbeitung der Sensorsignale entsprechend berücksichtigt.

Da aus den von dem Sensor aufgenommenen Lichtsignalen kein für einen Betrachter sichtbares Bild erzeugt werden soll, kann die Auflösung des erfindungsgemäßen Sensors deutlich kleiner sein als die Auflösung des Sensors einer herkömmlichen Digitalkamera. Beispielsweise kann der erfindungsgemäße Sensor weniger als 10.000 Pixel enthalten.

Gemäß einer bevorzugten Ausgestaltung ist die Signalverarbeitungseinheit zur Objekt- und/oder Gestenerkennung ausgebildet. Mittels der Objekterkennung können Objekte detektiert werden, die sich in dem von der Kraftfahrzeug-Sensorvorrichtung erfassten Bereich in- und/oder außerhalb des Kraftfahrzeugs befinden. Ferner können die Position und Lage der detektierten Objekte bestimmt werden. Darüber hinaus ist es auch denkbar, bestimmte Objekte mit Hilfe der Signalverarbeitungseinheit zu identifizieren. Mittels der Gestenerkennung können von Menschen mit Händen oder anderen Körperteilen ausgeführte Gesten erkannt werden.

Gemäß einer weiteren Ausführungsform umfasst die Kraftfahrzeug-Sensorvorrichtung Mittel, um den von der ersten Freiformreflektoreinheit erfassten Bereich auszuleuchten. Vorteilhafterweise verfügt die Kraftfahrzeug-Sensorvorrichtung dazu über eine Lichtquelle zur Erzeugung von Licht, insbesondere Infrarotlicht, und eine zweite Freiformreflektoreinheit, die derart ausgebildet ist, dass sie das von der Lichtquelle erzeugte Licht auf zumindest einen Teilbereich des Bereichs reflektiert, der von der ersten Freiformreflektoreinheit auf den lichtempfindlichen Sensor abgebildet wird.

Die zweite Freiformreflektoreinheit kann einen oder zwei Freiformreflektoren enthalten.

Im Strahlengang des von der ersten Freiformreflektoreinheit auf den lichtempfindlichen Sensor reflektierten Lichts kann ein optisches Bandpassfilter zur Unterdrückung störender Lichtanteile angeordnet sein.

Erfindungsgemäß umfasst die Kraftfahrzeug-Sensorvorrichtung eines Kraftfahrzeugs der eingangs genannten Art eine erste Freiformreflektoreinheit mit ein oder zwei Freiformreflektoren, die derart ausgebildet ist, dass sie einen vorgegebenen, in- und/oder außerhalb des Kraftfahrzeugs befindlichen Bereich auf den Sensor abbildet. Das erfindungsgemäße Kraftfahrzeug weist die oben beschriebenen Vorteile der erfindungsgemäßen Kraftfahrzeug-Sensorvorrichtung auf. Ferner kann das erfindungsgemäße Kraftfahrzeug die oben beschriebenen Ausgestaltungen aufweisen.

Ausführungsbeispiele der Erfindung sind in den Zeichnungen dargestellt und werden nachfolgend beschrieben. Es zeigen schematisch
- Fig. 1: eine Schnittzeichnung durch einen Teil eines Kraftfahrzeugs mit einer Kraftfahrzeug-Sensorvorrichtung mit einem lichtempfindlichen Sensor und einem Freiformreflektor;
- Fig. 2: eine Schnittzeichnung durch einen Teil eines Kraftfahrzeugs mit einer Kraftfahrzeug-Sensorvorrichtung mit einem lichtempfindlichen Sensor, einer Lichtquelle und zwei Freiformreflektoren;
- Fig. 3: eine Draufsicht auf einen Teil eines Kraftfahrzeugs mit einer Kraftfahrzeug-Sensorvorrichtung zur Verdeutlichung des von der Kraftfahrzeug-Sensorvorrichtung abgedeckten horizontalen Bildwinkels; und
- Fig. 4: eine seitliche Ansicht auf einen Teil eines Kraftfahrzeugs mit einer Kraftfahrzeug-Sensorvorrichtung zur Verdeutlichung des von der Kraftfahrzeug-Sensorvorrichtung abgedeckten vertikalen Bildwinkels.

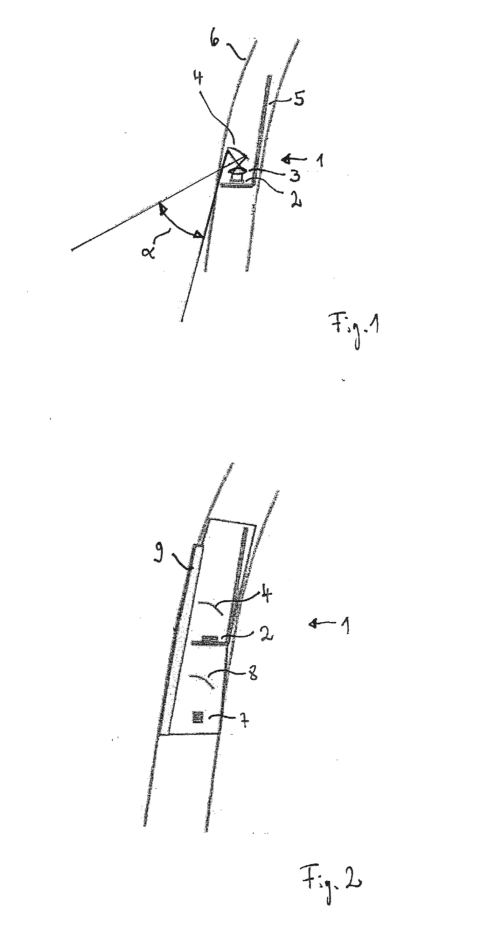

Fig. 1 zeigt schematisch eine Schnittzeichnung durch einen Teil eines Kraftfahrzeugs, beispielsweise im Bereich einer Seitentür. Das Kraftfahrzeug umfasst eine Kraftfahrzeug-Sensorvorrichtung 1, die in dem in Fig. 1 gezeigten Ausführungsbeispiel in eine Seitenwand des Kraftfahrzeugs integriert ist und zur Überwachung eines vorgegebenen Bereichs außerhalb des Kraftfahrzeugs ausgelegt ist.

Die Kraftfahrzeug-Sensorvorrichtung 1 umfasst einen Sensor 2 zur Umwandlung von Licht in elektrische Signale, eine direkt vor dem Sensor 2 angeordnete Primäroptik 3 und einen Freiformreflektor 4 als Sekundäroptik. Die Reflektorform des Freiformreflektors 4 ist derart ausgebildet, dass der vorgegebene Bereich außerhalb des Kraftfahrzeugs auf den Sensor 2 abgebildet wird.

In Fig. 1 ist der vorgegebene Bereich, der von der Kraftfahrzeug-Sensorvorrichtung 1 erfasst werden kann, durch zwei Lichtstrahlen gekennzeichnet, die den vorgegebenen Bereich eingrenzen. Die Lichtstrahlen bilden einen Bildwinkel α, der größer als 20° sein kann. Je nach Anwendung kann die Reflektorform des Freiformreflektors 4 unterschiedlich modelliert sein, um unterschiedliche Bereiche, insbesondere mit unterschiedlichen Bildwinkeln α, auf den Sensor 2 abzubilden.

Der Freiformreflektor 4 kann aus einem Spritzgussteil gefertigt sein, das zumindest auf einer Seite metallisiert wurde, um die Licht-reflektierende Fläche zu erzeugen.

Die Primäroptik 3 kann ein oder mehrere Linsen oder auch andere optische Elemente, wie beispielsweise Reflektoren, umfassen.

Der Sensor 2 kann ein mit Halbleiterprozesstechniken hergestellter lichtempfindlicher Halbleiterchip sein, der es ermöglicht, Licht in elektrische Signale umzuwandeln. Beispielsweise kann es sich bei dem Sensor 2 um einen CMOS-Sensor handeln.

Die Kraftfahrzeug-Sensorvorrichtung 1 umfasst ferner eine Leiterplatte 5, auf welcher der Sensor 2 mechanisch befestigt ist und mit welcher der Sensor 2 elektrisch verbunden ist. Die Leiterplatte 5 kann mit weiteren Einheiten, insbesondere Halbleiterchips, bestückt sein. Diese können insbesondere zur Stromversorgung und/oder Ansteuerung des Sensors 2, aber auch zur Signalverarbeitung der von dem Sensor 2 generierten elektrischen Signale dienen. In dem vorliegenden Ausführungsbeispiel ist dabei jedoch nicht vorgesehen, dass aus den von dem Sensor 2 aufgenommenen Signalen ein für einen Betrachter sichtbares Bild erzeugt wird.

In einer alternativen Ausführung wird aus den von dem Sensor 2 aufgenommenen Signalen ein für einen Betrachter sichtbares Bild erzeugt. Beispielsweise kann die Kraftfahrzeug-Sensorvorrichtung 1 als Komponente eines Parkassistenten eingesetzt werden. Bei einer solchen Ausführung könnte das von dem Sensor 2 aufgenommene Bild auf der Mittelkonsole des Kraftfahrzeugs angezeigt werden.

Die Kraftfahrzeug-Sensorvorrichtung 1 enthält eine Signalverarbeitungseinheit, die auf der Leiterplatte 5 angeordnet sein kann und zur Objekt-und/oder Gestenerkennung ausgebildet ist. Mit Hilfe der Signalverarbeitungseinheit können Objekte in dem vorgegebenen Bereich erkannt und insbesondere identifiziert werden und/oder es können Gesten von im vorgegebenen Bereich befindlichen Personen erkannt werden.

In Fig. 1 ist die Kraftfahrzeug-Sensorvorrichtung 1 durch ein Fenster 6 vom Außenbereich des Kraftfahrzeugs getrennt. Die Kraftfahrzeug-Sensorvorrichtung 1 kann anstelle des Außenbereichs des Kraftfahrzeugs auch auf einen vorgegebenen Bereich im Inneren des Kraftfahrzeugs gerichtet sein.

Die frei wählbare Reflektorform gestattet es, einen Bereich mit einem beliebigen Seitenverhältnis auf den lichtempfindlichen Sensor 2 abzubilden. Beispielsweise kann ein Bereich mit einem Seitenverhältnis von 3:10 auf einen CMOS-Sensor mit einem Seitenverhältnis von 3:4 abgebildet werden.

Die durch den Freiformreflektor 4 hervorgerufenen Verzerrungen in dem von dem Sensor 2 aufgenommenen Bild können durch eine Software, beispielsweise in der Signalverarbeitungseinheit, korrigiert werden. Da aus den aufgenommenen Daten kein für einen Betrachter sichtbares Bild erzeugt werden soll, ist es auch denkbar, dass die Verzerrungen nicht korrigiert werden und die signalverarbeitende Software stattdessen die durch den Freiformreflektor 4 hervorgerufenen Verzerrungen kennt und bei der Bildanalyse berücksichtigt.

Die Kraftfahrzeug-Sensorvorrichtung 1 kann für unterschiedliche Anwendungen eingesetzt werden. Dabei muss lediglich der Freiformreflektor 4 entsprechend angepasst werden. Die übrigen Komponenten der Kraftfahrzeug-Sensorvorrichtung 1 können unverändert beibehalten bzw. müssen nur geringfügig an die jeweilige Anwendung angepasst werden.

Fig. 2 zeigt eine Weiterbildung der Kraftfahrzeug-Sensorvorrichtung 1 aus Fig. 1. Diese enthält neben dem lichtempfindlichen Sensor 2 und dem Freiformreflektor 4 eine Lichtquelle 7 und einen Freiformreflektor 8. Der Freiformreflektor 8 ist derart modelliert, dass er mit dem von der Lichtquelle 7 erzeugten Licht den Bereich ausleuchtet, den die Kraftfahrzeug-Sensorvorrichtung 1 mittels des Freiformreflektors 4 und des lichtempfindlichen Sensors 2 überwacht.

Die Lichtquelle 7 kann Infrarotlicht erzeugen und insbesondere als Laser realisiert sein, der Infrarotlicht mit einer Wellenlänge bei 900 nm erzeugt.

Dem Sensor 2 kann ein optisches Bandpassfilter vorgeschaltet sein mit einem Durchlassbereich im Bereich der von der Lichtquelle 7 emittierten Wellenlänge.

Die Kraftfahrzeug-Sensorvorrichtung 1 ist mit einer für sichtbares Licht undurchlässigen und für Infrarotlicht durchlässigen Abdeckung 9 nach außen hin abgedeckt. Das von der Lichtquelle 7 emittierte und vom Sensor 2 aufgenommene Infrarotlicht kann folglich durch die Abdeckung 9 hindurchtreten, für einen Betrachter wird die Kraftfahrzeug-Sensorvorrichtung 1 durch die Abdeckung 9 jedoch verdeckt.

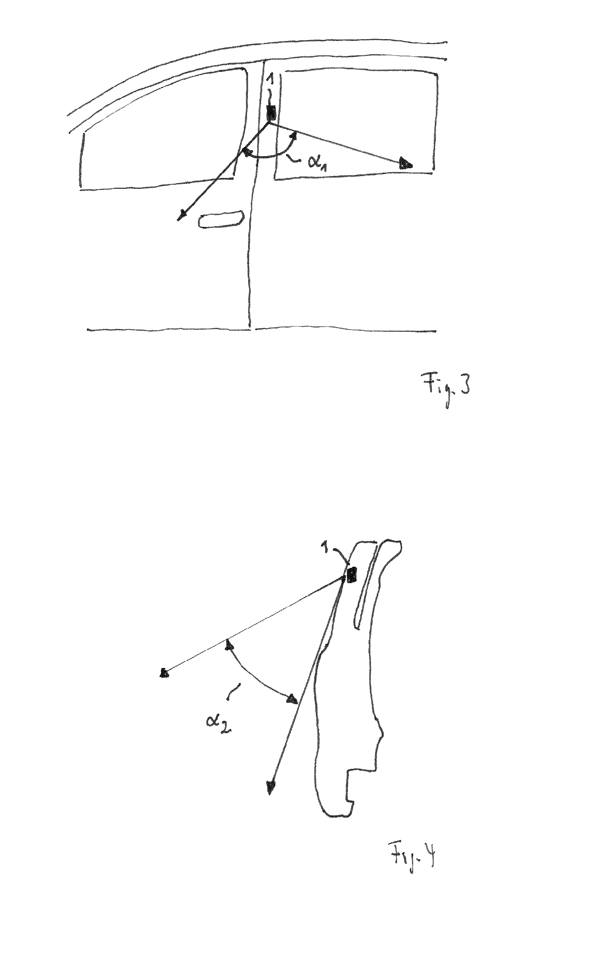

Fig. 3 zeigt schematisch eine Draufsicht auf einen Teil eines Kraftfahrzeugs mit einer Kraftfahrzeug-Sensorvorrichtung 1, die im Bereich der Seitentüren angeordnet ist. Zur Verdeutlichung des von der Kraftfahrzeug-Sensorvorrichtung 1 überwachten Bereichs sind in Fig. 3 zwei Lichtstrahlen eingezeichnet, die einen Bildwinkel α₁ miteinander bilden und den von der Kraftfahrzeug-Sensorvorrichtung 1 überwachten Bereich in einer ersten Richtung eingrenzen. Der Bildwinkel α₁ kann beispielsweise in horizontaler Richtung 135° betragen.

Fig. 4 zeigt schematisch eine seitliche Ansicht des Teils des Kraftfahrzeugs aus Fig. 3 mit der Kraftfahrzeug-Sensorvorrichtung 1. In Fig. 4 sind zwei Lichtstrahlen eingezeichnet, die einen Bildwinkel α₂ miteinander bilden und den von der Kraftfahrzeug-Sensorvorrichtung 1 überwachten Bereich in einer zweiten Richtung eingrenzen. Die durch die Lichtstrahlen in Fig. 4 aufgespannte Ebene steht senkrecht auf der durch die Lichtstrahlen in Fig. 3 aufgespannten Ebene. Ferner verläuft die durch die Lichtstrahlen in Fig. 4 aufgespannte Ebene senkrecht zur Fahrbahn. Demnach gibt der Bildwinkel α₂ den vertikalen Bildwinkel an, der beispielsweise 45° betragen kann.

In den Fig. 3 und 4 ist die Kraftfahrzeug-Sensorvorrichtung 1 im Bereich der B-Säule des Kraftfahrzeugs angeordnet. Die Kraftfahrzeug-Sensorvorrichtung 1 kann jedoch auch an einer anderen Stelle in das Kraftfahrzeug integriert sein, beispielsweise im Bereich des vorderen oder hinteren Nummernschilds. Ferner kann die Kraftfahrzeug-Sensorvorrichtung 1 auf einen Bereich im Innenraum des Kraftfahrzeugs, beispielsweise das Gesicht des Fahrers, gerichtet sein. Für unterschiedliche Anwendungen der Kraftfahrzeug-Sensorvorrichtung 1 können bis auf den Freiformreflektor 4 und gegebenenfalls den Freiformreflektor 8 dieselben Bauteile verwendet werden. Die Freiformreflektoren 4 und 8 werden der jeweiligen Anwendung und dem abzubildenden Bereich in- und/oder außerhalb des Kraftfahrzeugs angepasst.

**Bezugszeichenliste**

| | |
|---|---|
| 1 | Kraftfahrzeug-Sensorvorrichtung |
| 2 | Sensor |
| 3 | Primäroptik |
| 4 | Freiformreflektor |
| 5 | Leiterplatte |
| 6 | Fenster |
| 7 | Lichtquelle |
| 8 | Freiformreflektor |
| 9 | Abdeckung |
| α | Bildwinkel |
| α₁ | Bildwinkel |
| α₂ | Bildwinkel |

## Patentansprüche

1. Kraftfahrzeug-Sensorvorrichtung (1) mit einem Sensor (2) zur Umwandlung von Licht in elektrische Signale,
**gekennzeichnet durch**
eine erste Freiformreflektoreinheit (4), die derart ausgebildet ist, dass sie einen vorgegebenen, in- und/oder außerhalb eines Kraftfahrzeugs befindlichen Bereich auf den Sensor (2) abbildet.

2. Kraftfahrzeug-Sensorvorrichtung (1) nach Anspruch 1,
**gekennzeichnet durch**
eine Signalverarbeitungseinheit, welche die von dem Sensor (2) erzeugten elektrischen Signale empfängt und diese verarbeitet.

3. Kraftfahrzeug-Sensorvorrichtung (1) nach Anspruch 2,
**dadurch gekennzeichnet, dass**
keine Erzeugung eines sichtbaren Bilds aus den von dem Sensor (2) erzeugten elektrischen Signalen vorgesehen ist.

4. Kraftfahrzeug-Sensorvorrichtung (1) nach Anspruch 2 oder 3,
**dadurch gekennzeichnet, dass**
die Signalverarbeitungseinheit zur Objekt- und/oder Gestenerkennung ausgebildet ist.

5. Kraftfahrzeug-Sensorvorrichtung (1) nach einem der vorhergehenden Ansprüche,
**gekennzeichnet durch**
eine Lichtquelle (7) zur Erzeugung von Licht, und
eine zweite Freiformreflektoreinheit (8), die derart ausgebildet ist, dass sie das von der Lichtquelle (7) erzeugte Licht auf zumindest einen Teilbereich des Bereichs reflektiert, der von der ersten Freiformreflektoreinheit (4) auf den Sensor (2) abgebildet wird.

6. Kraftfahrzeug-Sensorvorrichtung (1) nach Anspruch 5,
**dadurch gekennzeichnet, dass** das von der Lichtquelle (7) erzeugte Licht Infrarotlicht ist.

7. Kraftfahrzeug-Sensorvorrichtung (1) nach einem der vorgehenden Ansprüche,
**gekennzeichnet durch**
ein dem Sensor (2) vorgeschaltetes optisches Bandpassfilter zur Filterung des von dem Sensor empfangenen Lichts.

8. Kraftfahrzeug mit einer Kraftfahrzeug-Sensorvorrichtung (1), die einen Sensor (2) zur Umwandlung von Licht in elektrische Signale umfasst,
**dadurch gekennzeichnet, dass**
die Kraftfahrzeug-Sensorvorrichtung (1) eine erste Freiformreflektoreinheit (4) umfasst, die derart ausgebildet ist, dass sie einen vorgegebenen, in- und/oder außerhalb des Kraftfahrzeugs befindlichen Bereich auf den Sensor (2) abbildet.

9. Kraftfahrzeug nach Anspruch 8,
**dadurch gekennzeichnet, dass**
die Kraftfahrzeug-Sensorvorrichtung (1) eine Signalverarbeitungseinheit umfasst, welche die von dem Sensor (2) erzeugten elektrischen Signale empfängt und diese verarbeitet.

10. Kraftfahrzeug nach Anspruch 9,
**dadurch gekennzeichnet, dass** keine Erzeugung eines sichtbaren Bilds aus den von dem Sensor (2) erzeugten elektrischen Signalen vorgesehen ist.

11. Kraftfahrzeug nach Anspruch 9 oder 10,
**dadurch gekennzeichnet, dass** die Signalverarbeitungseinheit zur Objekt- und/oder Gestenerkennung ausgebildet ist.

12. Kraftfahrzeug nach einem der Ansprüche 8 bis 11,
**dadurch gekennzeichnet, dass** die Kraftfahrzeug-Sensorvorrichtung (1) eine Lichtquelle (7) zur Erzeugung von Licht und eine zweite Freiformreflektoreinheit (8) umfasst, wobei die zweite Freiformreflektoreinheit (8) derart ausgebildet ist, dass sie das von der Lichtquelle (7) erzeugte Licht auf zumindest einen Teilbereich des Bereichs reflektiert, der von der ersten Freiformreflektoreinheit (4) auf den Sensor (2) abgebildet wird.

13. Kraftfahrzeug nach Anspruch 12,
**dadurch gekennzeichnet, dass** das von der Lichtquelle (7) erzeugte Licht Infrarotlicht ist.

14. Kraftfahrzeug nach Anspruch 13,
**dadurch gekennzeichnet, dass** eine für sichtbares Licht undurchlässige und für Infrarotlicht durchlässige Abdeckung (9) vorgesehen ist, welche die Kraftfahrzeug-Sensorvorrichtung (1) für einen Betrachter verdeckt.
